# EUROPÄISCHE PATENTSCHRIFT

(11) **EP 1 291 092 B1**
(45) Veröffentlichungstag und Bekanntmachung des Hinweises auf die Patenterteilung: **15.11.2006**
(21) Anmeldenummer: 02017176.5
(22) Anmeldetag: 31.07.2002
(51) Int. Cl.: B07B 13/00, D21B 1/02

(54) **Verfahren und Maschine zum Aussondern der Pappanteile aus einem Altpapier-Gemenge**
Method and device for removing cardboard from a wastepaper mixture
Procédé et dispositif pour éliminer le carton d'un mélange de vieux papiers

(30) Priorität: 07.09.2001 DE 10143897
(43) Veröffentlichungstag der Anmeldung: 12.03.2003
(73) Patentinhaber: Grumbach GmbH & Co. KG, 33428 Harsewinkel (DE)
(72) Erfinder: Grumbach, Udo, 33428 Harsewinkel (DE)
(74) Vertreter: Elbertzhagen, Otto

(56) Entgegenhaltungen:
- DE-C- 637 056
- FR-A- 2 725 641
- US-A- 5 590 789

## Beschreibung

Die Erfindung bezieht sich auf ein Verfahren und auf eine Maschine zum Aussondern der Pappanteile aus einem Altpapier-Gemenge welches aus labileren Papieranteilen und aus steiferen Pappanteilen besteht.

Unter Altpapier wird hier das gesammelte, zu recycelnde Papier verstanden, welches nach einer Grobsortierung ein Gemenge bildet, welches aus labileren Papieranteilen und aus steiferen Pappanteilen sich zusammensetzt. Die Papieranteile werden von den Recycling-Unternehmen an Papierfabriken geliefert, welche die Papieranteile für die Herstellung von Zeitungspapier verwenden. Zeitungen werden heutzutage auf Papier gedruckt, welches zu einem überwiegenden Anteil aus recyceltem Papier besteht. Dies setzt voraus, daß das verwertete, recycelte Papier einem Deinking-Verfahren unterzogen wird, in welchem die Farbanteile aus dem Zellulosematerial herausgezogen werden. Dies funktioniert jedoch nur bei bedrucktem Papier, nicht dagegen bei durchgefärbtem Papier und bei Pappe. Deshalb müssen aus dem zu recycelnden Altpapier-Gemenge die Pappanteile ausgesondert werden.

In der Praxis ist es mit vertretbarem Aufwand nicht möglich, aus dem jeweils anfallenden Altpapier-Gemenge die Pappanteile vollständig herauszuziehen. Deshalb wird von den Papierfabriken in dem für die Zeitungspapier-Herstellung verwendeten Altpapier ein Pappanteil von 2,5 % gerade noch hingenommen. Daher muß das angefallene Altpapier nach einer Grobsortierung noch einer Feinsortierung unterworfen werden, bei der nicht nur die Anteile von durchgefärbtem Papier, sondern vor allem auch die Pappanteile ausgesondert werden. Diese Feinsortierung wird bislang an laufenden Fördervorrichtungen, wie Förderbändern, manuell von einer Vielzahl von Arbeitskräften vorgenommen, und ist eine unter schwierigen Bedingungen durchzuführende Tätigkeit, deren Genauigkeit mit dem schwindenden Konzentrationsvermögen der Arbeitskräfte während einer Arbeitsschicht abnimmt.

Aus der alten deutschen Patentschrift 637 056 ist eine Sortieranlage für Hausmüll bekannt, mit der weichere Bestandteile aus der Müllmasse, wie auch Papiere und Stoffreste, ausgesondert werden können. Dazu ist ein mit Stacheln besetztes Transportband vorgesehen, auf das die Müllbestandteile aufgeworfen werden und auf dessen Stacheln die weicheren Bestandteile, so auch die Papierstücke, aufgespießt werden. Mittels einer Trommel, die an der Umlenkstelle des mit Stacheln versehenen Transportbandes mit Widerhaken in geschlitzte Zähne der Umlenkwalze bis unter den Stützbereich des Transportbandes eingreift, werden die aufgespießten Papierstücke von den Stacheln des Transportbandes abgestreift. Eine Unterscheidung zwischen labileren Papierstücken und relativ dazu steiferen Pappanteilen liegt hierbei nicht vor.

Aus der US-Patentschrift 5,590,789 geht ein Verfahren und eine Einrichtung zum Aussondern von thermoplastischen Bestandteilen aus einem Materialstrom hervor, wobei eine Stachelwalze zum Einsatz kommt. Die an den Stacheln dieser Walze aufgespießten thermoplastischen Bestandteile werden in Umfangsrichtung der Stachelwalze in Abstand von der Aufnahmestelle durch eine geeignete Vorrichtung abgestreift. Für das Aussondern von Pappanteilen aus einem Altpapier-Gemenge ist die aus dem Dokument bekannte Einrichtung nicht vorgesehen und auch nicht geeignet.

Ein Verfahren und eine entsprechende Vorrichtung zum Sortieren von Materialen auf der Basis ihrer Eigenschaften ist aus der FR-A-2 725 641 bekannt.

Der Erfindung liegt die Aufgabe zugrunde, ein Verfahren und eine Maschine der eingangs genannten Art zu schaffen, um eine Aussonderung der Pappanteile aus dem Altpapier-Gemenge bei gleichbleibend hohem Sortierungsgrad zu ermöglichen.

Diese Aufgabe wird verfahrensmäßig dadurch gelöst, daß die Papier- und Pappanteile auf einer Fördervorrichtung flachliegend transportiert und lediglich partiell mit einem solchen Stützabstand unterstützt werden, daß mittels auf die nicht unterstützten Abschnitte der Papierund Pappanteile auflaufender Stacheln einer Aufnehmervorrichtung zum einen die labileren Papieranteile in die unterhalb ihrer nicht unterstützten Abschnitte liegenden Freiräume der Fördervorrichtung hineingezogen sowie von der Fördervorrichtung weiter mitgenommen werden und zum anderen die Pappanteile durchstochen sowie aufgespießt werden, wonach die Pappanteile in räumlichem Abstand von den von der Fördervorrichtung ablaufenden Papieranteilen von den Stacheln der Aufnehmervorrichtung abgestreift werden.

Weiter wird die genannte Aufgabe bei einer entsprechenden Maschine gelöst durch eine die Papier- und Pappanteile flachliegend transportierende Fördervorrichtung, die in einer Sortierstation endet und im Endbereich zwischen Unterstützungsbereichen sowie unterhalb davon Freiräume aufweist, weiter durch eine in der Sortierstation angeordnete Aufnehmervorrichtung, die mit frei vorstehenden Stacheln besetzt ist und die sich synchron mit der Fördervorrichtung bewegt, wobei die Stacheln der Aufnehmervorrichtung derart ausgerichtet sind, daß sie durch die vertieft liegenden Freiräume der Fördervorrichtung unter Mitziehen der auf der Fördervorrichtung verbleibenden Papieranteile sowie unter Aufspießen und Aufnahme der Pappanteile hindurchtauchen, und ferner durch eine Abstreifvorrichtung für die Pappanteile, die einerseits im Bewegungsbereich der Aufnehmervorrichtung und andererseits räumlich getrennt von der Ablaufstelle für die Papieranteile an der Fördervorrichtung angeordnet ist.

Für die Erfindung ist die Erkenntnis wesentlich, daß bedrucktes Papier, wie Zeitungspapier, relativ labil ist und somit gegenüber Pappe eine hohe Flexibilität aufweist. Folglich kann Pappe mit den Stacheln oder Dornen der zur Erfindung gehörenden Aufnehmervorrichtung unter bestimmten Bedingungen aufgespießt werden, das flexiblere Papier dagegen nicht. Dementsprechend wird das Spaltmaß oder der Durchmesser der Freiräume an der das Altpapier-Gemenge transportierenden Fördervorrichtung so gewählt, daß die Stacheln der Aufnehmervorrichtung das weitgehend flachliegende Papier in diese Freiräume beim Eintauchen darin hineindrücken können, die steifere Pappe dagegen im Überbrückungsbereich zwischen den Unterstützungsstellen am Rand der Freiräume einen solch hohen Biegewiderstand den beaufschlagenden Stacheln der Aufnehmervorrichtung entgegensetzt, daß sie von den Stacheln durchstochen wird. Dementsprechend sind die Stacheln ausgebildet und insbesondere im Bereich der Stachelspitzen gestaltet. Die an den Stacheln aufgespießten Pappanteile bleiben infolge Klemmung an der Aufnehmervorrichtung haften und werden von der Fördervorrichtung abgenommen, während die Papieranteile von der Fördervorrichtung weiter mitgenommen werden und davon ablaufen. Das Abstreifen der Pappanteile von der Aufnehmervorrichtung geschieht an anderer Stelle als der Ablauf der Papieranteile von der Fördervorrichtung, so daß die von der Aufnehmervorrichtung ausgesonderten Pappanteile in räumlichem Abstand zu den Papieranteilen ausgeschleust werden können.

Bei einer Fördervorrichtung für den Transport des Altpapier-Gemenges in flachliegender Anordnung der Papierund der Pappanteile können die Stützabstände der Unterstützungsstellen, die bei aufliegender Pappe eine Durchstechung ermöglichen, bei flexiblerem Papier hingegen nicht, in unterschiedlicher Weise ausgebildet sein. So kann die Fördervorrichtung aus einem Förderband bestehen, welches eine entsprechende Lochung hat, deren Rasterung der Anordnung der vorstehenden Stacheln an der Aufnehmervorrichtung entspricht, um den gewünschten Stacheleingriff zu ermöglichen. Ebenso kann die Fördervorrichtung aus einem Transportband bestehen, welches eine Vielzahl von vorstehenden Höckern hat, welche die Unterstützungsstellen bilden und zwischen denen die Stacheln der Aufnehmervorrichtung durchtauchen. Auch in Längsrichtung durchgehende Spalte an der Fördervorrichtung sind möglich, wie sie nachstehend anhand des Ausführungsbeispiels noch erläutert werden. In besonders vorteilhafter Ausführung können die Stacheln der Aufnehmervorrichtung mit einer das Förderende der Fördervorrichtung bildenden Walze kämmen, welche die Freiräume zum Eintauchen der Stacheln hat.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in weitgehend schematischer, perspektivischer Wiedergabe eine Einrichtung zum Aussondern der Pappanteile aus einem Altpapier-Gemenge schräg von oben von der Aufgabestation her gesehen,
- Fig. 2: eine perspektivische Ansicht des in der Sortierstation einer Einrichtung entsprechend Fig. 1 angeordneten Endes der das Gemenge tragenden Fördervorrichtung in anderer Ausführung,
- Fig. 3: eine Ansicht schräg von oben des in Fig. 2 dargestellten Endes der Fördervorrichtung unter Weglassen der Aufnehmervorrichtung,
- Fig. 4: eine Ansicht des Endes der Fördervorrichtung entsprechend Fig. 2 in Förderrichtung gesehen und
- Fig. 5: eine weitere, leicht perspektivische Seitansicht des Endes der Fördervorrichtung nach Fig. 2.

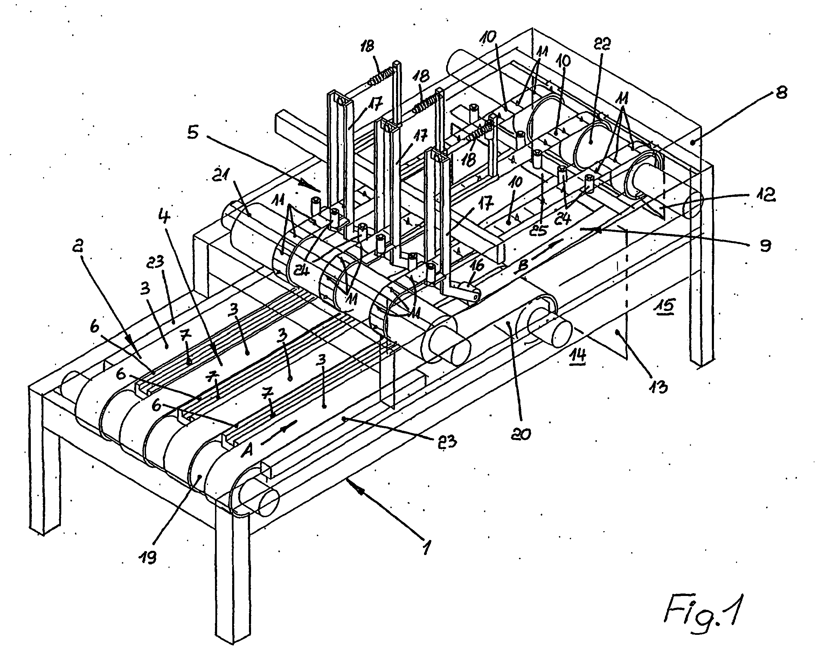

Im einzelnen zeigt Figur 1 ein Gestell 1, welches eine Fördervorrichtung 2 trägt, die aus parallel miteinander höhengleich angeordneten Transportbändern 3 besteht. Die Transportbänder 3 sind über gemeinsame Umlenkwalzen 19 und 20 geführt, von denen eine mittels eines nicht dargestellten Motors angetrieben wird. Die obenliegenden Außenseite der Obertrume der Transportbänder 3 stellt die Transportseite der Fördervorrichtung 2 dar, hier bewegen sich die Förderbänder 3 in Richtung des Pfeiles A. Am einen Ende des Gestells 1 liegen die Transportbänder 3 mit ihrer Transportseite nach oben hin frei, und hierdurch ist eine Aufgabestation 4 gebildet, an der auf die Fördervorrichtung 2 die Papierund die Pappanteile eines Altpapier-Gemenges flachliegend aufgebracht werden. Von der Aufgabestation 4 werden diese Papier- und Pappanteile zu einer Sortierstation 5 transportiert.

Außerhalb der vorderen Aufgabestation 4 ist auf das Gestell 1 ein weiteres Gestell 8 aufgesetzt, welches eine Aufnehmervorrichtung 9 aufnimmt. Diese Aufnehmervorrichtung 9 weist umlaufende Bänder 10 auf, die über jeweils gemeinsame Umlenkwalzen 21 und 22 geführt sind, von denen eine derart über einen Motor angetrieben ist, daß sich die Untertrume der Bänder 10 entsprechend dem Pfeil B synchron mit den Obertrumen der Transportbänder 3 der Fördervorrichtung 2 in deren Förderrichtung bewegen.

Die Transportbänder 3, die miteinander parallel angeordnet sind, haben einen Abstand zueinander. Jeweils fluchtend mit der Lücke zwischen zwei dieser Transportbänder 3 ist jeweils eines der Bänder 10 der Aufnehmervorrichtung 9 angeordnet, das mit der Außenseite seines Untertrums im wesentlichen in gleicher Höhe wie die Außenseite der Obertrume der benachbarten Transportbänder 3 liegt. Im Bereich der Sortierstation 5 überlappt die Aufnehmervorrichtung 9 mit ihren Bändern 10 die Fördervorrichtung 2, so daß im rückwärtigen Bereich die Aufnehmervorrichtung 9 in der Förderrichtung gesehen über das rückwärtige Umlenkende der Fördervorrichtung 2 hinausreicht.

Zwischen den beabstandeten Transportbändern 3 der Fördervorrichtung 2 sind Gleitschienen 6 angeordnet, gegen deren Oberseiten die Bänder 10 der Aufnehmervorrichtung 9 zumindest an einer Stelle, auf die nachstehend noch eingegangen werden wird, angedrückt sind. Die Bänder 10 haben an ihren Außenseiten frei vorstehende Stacheln 10, die jedoch nicht mit den Gleitschienen 6 kollidieren, weil die Gleitschienen 6 längslaufende Nuten haben, die somit unterhalb der Förderebene oder -fläche für die darauf flachliegend transportierten Papier- und Pappanteile Hohlräume 7 bilden, in welche die vorstehenden Stacheln 11 der Bänder 10 der Aufnehmervorrichtung 9 eintauchen können. Im übrigen liegen die Oberseiten der Gleitschienen 6 niveaugleich mit den Außenseiten der obenlaufenden Trume der Transportbänder 3, so daß das auf die Transportbänder 3 aufgelegte Gut, welches dort mit ausreichender Friktion in Förderrichtung mitgenommen wird, auf den Oberseiten der Gleitschienen 6 entlangrutschen kann.

Erreicht dieses aus Papier- und Pappanteilen bestehende Gut die Sortierstation 5, kommen damit die Stacheln 11 an den umlaufenden Bändern 10 der Aufnehmervorrichtung 9 in Eingriff. Die Stacheln 11, die am Umfang der Bänder 10 der Aufnehmervorrichtung 9 in einer Flucht mit den Nuten bzw. Hohlräumen 7 der Gleitschienen 6 der Fördervorrichtung 2 liegen, drücken die Papieranteile in die genannten Hohlräume 7 hinein, ohne jedoch das flexible oder labile Papier zu durchstechen. Dagegen ist die Pappe der die Hohlräume 7 überbrückenden Pappanteile so steif, daß eine Durchstechung der Pappe mitttels der Stacheln 11 der Bänder 10 erfolgt, wodurch die Pappanteile an einer oder mehrerer der Stacheln 11 der Bänder 10 aufgespießt werden. Das in die Hohlräume 7 hineingezogene, nicht durchstochene Papier verbleibt auf der Fördervorrichtung 2 und wird entsprechend von dieser weiter mitgenommen.

Am Ende der Fördervorrichtung 2, also in Förderrichtung hinter der Umlenkwalze 20, laufen die Papieranteile von der Fördervorrichtung 2 ab und fallen nach unten auf einen Abwurfplatz 14. Im Gegensatz dazu werden die an den Stacheln 11 der Bänder 10 aufgespießten, daran klemmenden Pappanteile an der Außenseite der Untertrume hängend weiter mitgenommen und über eine Trennwand 13 hinweg befördert, die den Abwurfplatz 14 von einem Abwurfplatz 15 für die Pappanteile abteilt. Oberhalb des Abwurfplatzes 15 laufen die Bänder 10 mit ihren Außenseiten an einer Abstreifvorrichtung 12 vorbei, welche die Pappanteile von den Stacheln 11 der Bänder 10 abstreift, so daß diese Pappanteile am hinteren Ende der gesamten Einrichtung auf den Abwurfplatz 15 hinabfallen.

Die beiden Abwurfplätze 14 und 15, zum einen für die Papieranteile und zum anderen für die Pappanteile, können als Aufgabestationen weiterer Fördervorrichtungen ausgebildet sein, um die voneinander getrennten Papierund Pappanteile auf getrennten Wegen ihrer jeweiligen weiteren Verwendung zuzuführen.

Grundsätzlich wird man vorsehen, daß die Bänder 10 der Aufnehmervorrichtung 9 für die Pappanteile sich im Bereich des Untertrums mit gleicher Geschwindigkeit wie die Obertrume der Transportbänder 3 der Fördervorrichtung 2 bewegen. Die besondere, in der Zeichnung dargestellte Ausführungsform bietet jedoch den Vorzug, zwischen den Bändern 10 der Aufnehmervorrichtung 9 und den Transportbändern 3 der Fördervorrichtung 2 eine Relativgeschwindigkeit vorsehen zu können, da die auf den Gleitschienen 6 gleitenden Bänder 10, deren Stacheln 11 durch die längslaufenden, nutförmigen Freiräume 7 der Gleitschienen 6 hindurchtauchen, nicht mit den Transportbändern 3 der Fördervorrichtung 2 in Berührung kommen müssen.

Die der Fördervorrichtung 2 benachbarten Trume der Bänder 10 der Aufnehmervorrichtung 9 sind nahe der Einlaufseite der Sortierstation 5 an ihren Innenseiten mittels Sensorrollen 16 beaufschlagt, die gegen einen elastischen Widerstand verschwenkbar sind. Dazu sind die Sensorrollen 10 an einem Bügel 17 gelagert, der als Wippe ausgebildet ist, an deren ersten Hebelarm jeweils die Sensorrolle 16 angeordnet ist. Am zweiten Hebelarm des Bügels 17 greift eine Zugfeder 18 an, welche für die von der Sensorrolle 16 auf das jeweilige Trum des betreffenden Bandes 10 ausgeübte Andruckkraft sorgt. In Förderrichtung von den Sensorrollen 16 weg vergrößert sich der Abstand zwischen den Untertrumen der Bänder 10 der Aufnehmervorrichtung 9 und der Transportseite der Fördervorrichtung 2.

Von der jeweiligen Sensorrolle 16 bis zur Einlaufstelle an der Umlenkwalze 21 vergrößern die Bänder 10 ihren Abstand zur Fördervorrichtung 2, womit an der Einlaufseite der Sortierstation 5 ein sich bis zu den Sensorrollen 10 hin verengender Einlaufzwickel für das zu sortierende Gut gebildet ist. Hat insbesondere durch mitgeführte Fremdkörper, wie Holzstücke, das an sich flachliegende, zu sortierende Gut eine zu große Dicke, dann wird zumindest eine der Sensorrollen 16 entgegen der Kraft der Feder 18 um einen solchen Weg mitsamt dem betreffenden Trum des Bandes 10 der Aufnehmervorrichtung 9 verschwenkt, ab dem eine Stillsetzung der gesamten Einrichtung erfolgt, damit der Störkörper beseitigt werden kann, um nicht in die voneinander getrennten Papier- und Pappanteile zu gelangen.

Bei den Umlenkwalzen 19 und 20 der Fördervorrichtung 2 erübrigt es sich, zur Führung der Transportbänder 3 eine besondere Spur vorzusehen, da die Seitenführung der Transportbänder 3 durch die Gleitschienen 6 einerseits und durch zusätzliche Führungsschienen 23 an den Außenseiten der beiden außenliegenden Transportbänder 3 sichergestellt ist. Ebenso entfallen solche Führungsvorrichtungen auch auf den Umlenkwalzen 21 und 22 für die Bänder 10 der Aufnehmervorrichtung 9. Hier sind zur Seitenführung der Bänder 10 Führungsrollen 24 zu beiden Seiten der Bänder 10 jeweils nahe der betreffenden Umlenkwalze 21, 22 vorgesehen, die auf Quertraversen 25 des Gestells 8 angeordnet sind.

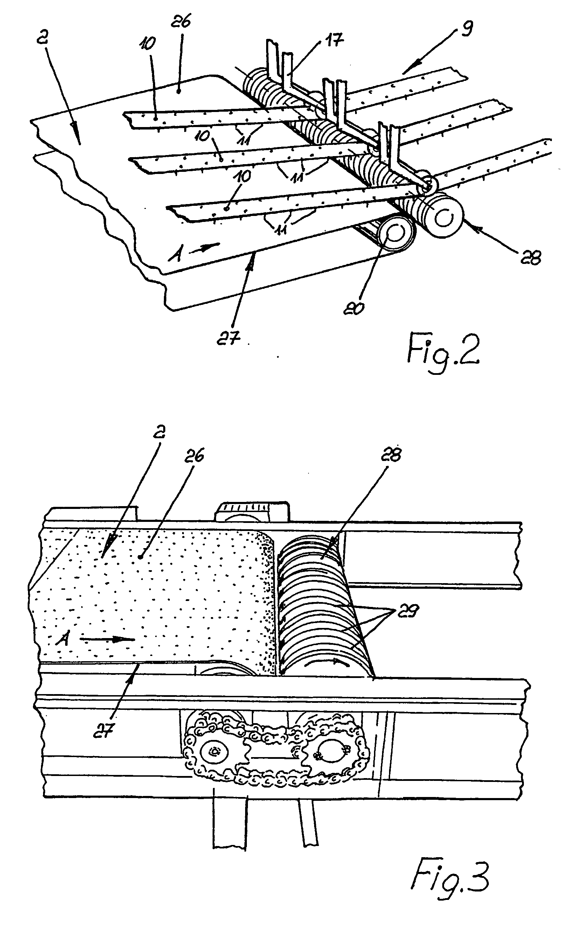

Die in Fig. 1 dargestellte Einrichtung kann in der Weise modifiziert sein, wie es die Figuren 2 - 5 veranschaulichen. Statt der einzelnen Transportbänder 3 weist hier die Fördervorrichtung 2 ein Förderband 26 auf, welches über die gesamte Förderbreite der Fördervorrichtung 2 reicht. In gleicher Weise wie die Transportbänder 3 wird das Förderband 26 über Umlenkwalzen geführt, von denen die nahe dem Förderende der Fördervorrichtung 2 liegende Umlenkwalze 20 in Fig. 2 dargestellt ist. Am Ablaufende des Förderbandes 26 schließt eine Walze 28 an, die mit ihrem oberen Scheitel niveaugleich mit dem Obertrum 27 des Förderbandes 26 liegt. Zudem ist die Walze 28 achsparallel zu der Umlenkwalze 20 für das Förderband 26 angeordnet, und der Abstand zwischen der Walze 28 und dem Ablaufende des Förderbandes 26 ist so gering, daß das zu sortierende Gut von dem Förderband 20 über den oberen Scheitelbereich der Walze 28 hinweg weitergeführt wird. Dazu kann die Walze 28 mit einer Umfangsgeschwindigkeit angetrieben sein, die der Fördergeschwindigkeit der Fördervorrichtung 2 entspricht. Die Walze 28 bildet das Förderende der gesamten Fördervorrichtung 2, von dem die Papieranteile ablaufen.

Anders verhält es sich auch hier mit den Pappanteilen, diese werden nämlich an den Dornen 11 der Aufnehmervorrichtung 9 klemmend aufgespießt, wie es auch bei dem Ausführungsbeispiel nach Fig. 1 der Fall ist. Deshalb ist die Aufnehmervorrichtung 9 hier in gleicher Weise ausgebildet. Der Unterschied der modifizierten Ausführung zu der nach Fig. 1 besteht darin, daß die Freiräume 7 an der Walze 28 vorhanden sind, in welche die Stacheln 11 der Bänder 10 der Aufnehmervorrichtung 9 eintauchen bzw. hindurchtauchen können.

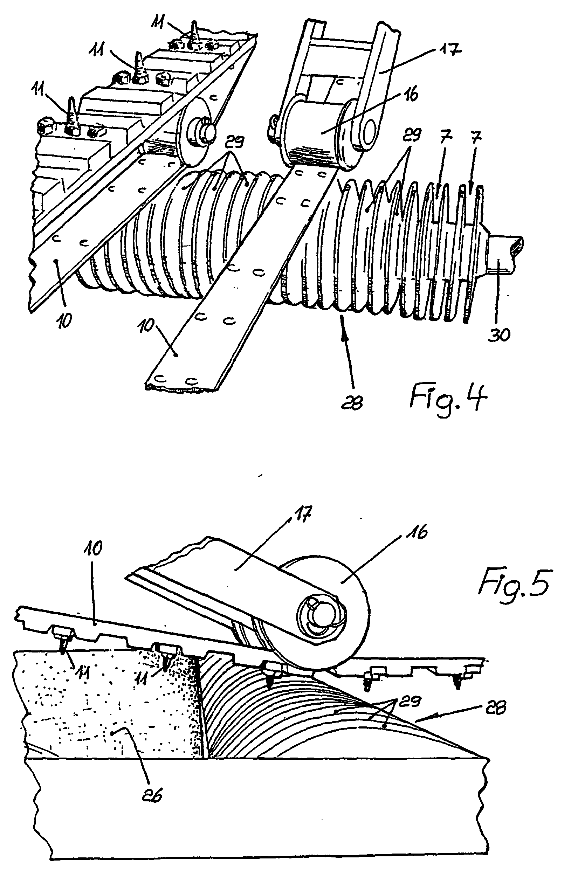

Dazu besteht die Walze 28, wie insbesondere Fig. 4 deutlich macht, aus einer Vielzahl koaxial miteinander angeordneter Scheiben 29 von gleichem Durchmesser, die in regelmäßigen Abständen auf einer Achse 30 angeordnet sind. Infolge dieser Abstände besteht jeweils zwischen zwei der genannten Scheiben 29 ein solcher Freiraum 7, der in Umfangsrichtung der Walze 28 durchgängig ist. An den Transportbändern 10 sind die Stacheln 11 jeweils in einer Reihe in Umlaufrichtung fluchtend angeordnet und eine solche Stachelreihe ist auf einen dieser Freiräume 7 ausgerichtet, durch den die Stacheln hindurchtreten. Die flexiblen Papieranteile werden auch hier in die Freiräume 7 von den Stacheln 11 hineingedrückt und laufen von der Fördervorrichtung 2 an der vom Förderband 26 abgelegenen Seite der Walze 28 ab. Die Pappanteile hingegen überbrücken die Freiräume 7 und werden entsprechend von den in Umfangsrichtung der Walze 28 verlaufenden Rändern der Scheibe 29 abgestützt. So werden die Pappanteile auch hier aufgrund ihrer Steifheit von den Stacheln 7 an den Bändern 10 der Abnehmervorrichtung 9 aufgespießt und über die Ablaufseite der Walze 28 hinaus, an der die Papieranteile abgeworfen werden, von der umlaufenden Abnehmervorrichtung 9 mitgenommen.

Anders als in den Fig. 2 - 5, kann die Aufnehmervorrichtung 9 eine größere Anzahl derBänder 10 oder statt dessen eines oder zwei derartiger Bänder größerer Breite aufweisen, um die Anzahl der mit den umfänglichen Freiräumen 7 an der Walze 28 fluchtenden Reihen der Stacheln 11 zu erhöhen. Zum anderen kann die Walze 28 an denjenigen Stellen, an denen Stacheln 11 nicht eingreifen, ohne eine die Freiräume 7 aufweisende Umfangskontur ausgebildet sein.

## Patentansprüche

1. Verfahren zum Aussondern der Pappanteile aus einem Altpapier-Gemenge, welches aus labileren Papieranteilen und aus steiferen Pappanteilen besteht, bei dem die Papier- und Pappanteile auf einer Fördervorrichtung flachliegend transportiert und lediglich partiell mit einem solchen Stützabstand unterstützt werden, daß mittels auf die nicht unterstützten Abschnitte der Papier- und Pappanteile auflaufender Stacheln einer Aufnehmervorrichtung zum einen die labileren Papieranteile in die unterhalb ihrer nicht unterstützten Abschnitte liegenden Freiräume der Fördervorrichtung hineingezogen sowie von dieser weiter mitgenommen werden und zum anderen die Pappanteile durchstochen sowie aufgespießt werden, wonach die Pappanteile in räumlichem Abstand von den von der Fördervorrichtung ablaufenden Papieranteilen von den Stacheln der Aufnehmervorrichtung abgestreift werden.

2. Maschine zum Aussondern der Pappanteile aus einem Altpapier-Gemenge, welches aus labileren Papieranteilen und aus steiferen Pappanteilen besteht,
**gekennzeichnet durch**,
eine die Papier- und Pappanteile flachliegend transportierende Fördervorrichtung (2), die in einer Sortierstation (5) endet und im Endbereich zwischen Unterstützungsbereichen sowie unterhalb davon Freiräume (7) aufweist, **durch** eine in der Sortierstation (5) angeordnete Aufnehmervorrichtung (9), die mit frei vorstehenden Stacheln (11) besetzt ist und die sich synchron mit der Fördervorrichtung (2) bewegt, wobei die Stacheln (11) der Aufnehmervorrichtung (9) derart ausgerichtet sind, daß sie **durch** die vertieft liegenden Freiräume (7) der Fördervorrichtung (2) unter Mitziehen der -auf der Fördervorrichtung (2) verbleibenden Papieranteile sowie unter Aufspießen und Aufnahme der Pappanteile hindurchtauchen, und ferner **durch** eine Abstreifvorrichtung (12) für die Pappanteile, die im Bewegungsbereich der Aufnehmervorrichtung (9) sowie räumlich getrennt von der Ablaufstelle für die Papieranteile an der Fördervorrichtung (2) angeordnet ist.

3. Maschine nach Anspruch 2,
**dadurch gekennzeichnet,**
**daß** die Fördervorrichtung (2) aus miteinander parallelen, umlaufenden Transportbändern (3) besteht, die jeweils in einem solchen Abstand voneinander angeordnet sind, daß dazwischen die Freiräume (7) ausgebildet sind.

4. Maschine nach Anspruch 3,
**dadurch gekennzeichnet,**
**daß** zwischen den Transportbändern (3) der Fördervorrichtung (2) damit höhengleiche, feststehende Gleitschienen (6) angeordnet sind, die längslaufende, mit den Transportbändern (3) parallele, die Freiräume (7) bildende Nuten aufweisen.

5. Maschine nach einem der Ansprüche 2 - 4,
**dadurch gekennzeichnet,**
**daß** die Fördervorrichtung (2) eine nach oben hin liegende, ebene Transportseite hat, oberhalb der die Aufnehmervorrichtung (9) angeordnet ist.

6. Maschine nach einem der Ansprüche 2 - 5,
**dadurch gekennzeichnet,**
**daß** die Aufnehmervorrichtung (9) aus zumindest einem umlaufenden Band (10) besteht, das an seinen Außenseiten die Stacheln (11) trägt.

7. Maschine nach Anspruch 6,
**dadurch gekennzeichnet,**
**daß** das zumindest eine Band (10) der Aufnehmervorrichtung (9) die Fördervorrichtung (2) im Bereich der Sortierstation (5) überlappt und darüber hinaus in der Förderrichtung verlängert ist.

8. Maschine nach Anspruch 7,
**dadurch gekennzeichnet,**
**daß** unterhalb der über die Fördervorrichtung (2) hinausragenden Verlängerung der Aufnehmervorrichtung (9) sich ein Abwurfplatz (14) für die von der Fördervorrichtung (2) ablaufenden Papieranteile befindet.

9. Maschine nach Anspruch 8,
**dadurch gekennzeichnet,**
**daß** unterhalb der über die Fördervorrichtung (2) hinausragenden Verlängerung der Aufnehmervorrichtung (9) sich ein zweiter, von dem ersten Abwurfplatz (14) abgeteilter Abwurfplatz (15) für die von der Aufnehmervorrichtung (9) abgestreiften Pappanteile befindet und entsprechend die Abstreifvorrichtung (12) an der Unterseite der Aufnehmervorrichtung (9) angeordnet ist.

10. Maschine nach einem der Ansprüche 6 - 9,
**dadurch gekennzeichnet,**
**daß** in Fördervorrichtung gesehen das zumindest eine Band (10) der Aufnehmervorrichtung (9) mit seinem zur Fördervorrichtung (2) hin liegenden Trum unter einem spitzen Winkel auf das Ende der Fördervorrichtung (2) zuläuft.

11. Maschine nach einem der Ansprüche 5 - 10,
**dadurch gekennzeichnet,**
**daß** im Bereich der Sortierstation (5) die Innenseite des zur Fördervorrichtung (2) hin liegenden Trums des zumindest einen Bandes (10) der Aufnehmervorrichtung (9) mittels einer Sensorrolle (16) beaufschlagt ist, die gegen die Kraft einer Feder (18) schwenkbar gelagert ist und über die bei Auslenkung um einen vorgegebenen Schwenkweg die Antriebe der Fördervorrichtung (2) und der Aufnehmervorrichtung (9) stillgesetzt werden.

12. Maschine nach Anspruch 11,
**dadurch gekennzeichnet,**
**daß** das der Fördervorrichtung (2) benachbarten Trum des
zumindest einen Bandes (10) der Aufnehmervorrichtung (9) von der Sensorrolle (16) aus relativ zum Ende der Fördervorrichtung (2) zwecks Bildung eines Einlaufzwickels divergiert.

13. Maschine nach einem der Ansprüche 4 - 12,
**dadurch gekennzeichnet,**
**daß** die Fördervorrichtung (2) ein die gesamte Förderbreite abdeckendes Förderband (26) aufweist, an das in der Förderrichtung eine das Ende der Fördervorrichtung (2) bildende Walze (28) anschließt, an welcher die die Stacheln (11) der Aufnehmervorrichtung (9) aufnehmenden Freiräume (7) ausgebildet sind.

14. Maschine nach Anspruch 13,
**dadurch gekennzeichnet,**
**daß** die Walze (28) mit ihrem oberen Scheitelbereich höhengleich mit der Oberseite des Obertrums (27) des Förderbandes (26) angeordnet ist.

15. Maschine nach Anspruch 13 oder 14,
**dadurch gekennzeichnet,**
**daß** die Walze (28) aus miteinander koaxialen Scheiben (29) besteht, die einen den jeweiligen Freiraum (7) zwischen sich bildenden Abstand voneinander haben.

16. Maschine nach einem der Ansprüche 13 - 15,
**dadurch gekennzeichnet,**
**daß** die Walze (28) mit einer mit der Fördergeschwindigkeit des Förderbandes (26) synchronen Umfangsgeschwindigkeit angetrieben ist.

## Claims

1. Method for separating the cardboard from a mixture of recycled paper which consists of softer parts of paper and stiffer parts of card wherein the paper and card parts are transported lying flat on a conveyor device and are only partially supported with a supporting space which is such that, by means of the barbs of a pick-up device extending onto the non-supported sections of the paper and card on the one hand, the softer paper is pressed into the clearances of the conveyor device lying underneath its non-supported sections, and are entrained further by same and on the other hand the card parts are pierced and spiked, after which the card parts are stripped from the barbs of the pick-up device at a spatial distance from the paper parts being discharged by the conveyor device.

2. Machine for separating out the card parts from a mixture of recycled paper which consists of softer paper parts and stiffer card parts,
**characterised by**
a conveyor device (2) which transports the paper and card parts lying flat and which ends in a sorting station (5) and has free spaces (7) in the end region between the supporting areas as well as underneath same, by a pick-up device (9) which is mounted in the sorting station (5) and which is fitted with freely protruding barbs (11) and which moves in synchronisation with the conveyor device (2) whereby the barbs (11) of the pick-up device (9) are aligned so that they project through the lower-lying free spaces (7) of the conveyor device (2) by taking with them the paper parts remaining on the conveyor device (2) as well as by spearing and picking up the card parts, and furthermore by a stripper device (12) for the card parts which is arranged in the area of movement of the pick-up device (9) as well as spatially separated from the discharge point for the paper parts on the conveyor device (2).

3. Machine according to claim 2,
**characterised in that**
the conveyor device (2) consists of revolving conveyor belts (3) which are parallel with one another and which are each arranged at such a distance from one another that the free spaces (7) are formed in-between same.

4. Machine according to claim 3,
**characterised in that**
between the conveyor belts (3) of the conveyor device (2) there are fixed slide rails (6) set at the same level and having longitudinally running grooves which are parallel with the conveyor belts (3) and form the free spaces (7).

5. Machine according to one of claims 2 to 4,
**characterised in that**
the conveyor device (2) has an upwardly lying flat transport side above which the pick-up device (9) is mounted.

6. Machine according to one of claims 2 to 5,
**characterised in that**
the pick-up device (9) consists of at least one revolving belt (10) which supports the barbs (11) on its outer side.

7. Machine according to claim 6,
**characterised in that**
the at least one belt (10) of the pick-up device (9) overlaps the conveyor device (2) in the region of the sorting station (3) and is furthermore extended beyond same in the conveying direction.

8. Machine according to claim 7,
**characterised in that**
underneath the extension of the pick-up device (9) which projects over the conveyor device (2) there is a discharge place (14) for the paper parts which are discharged from the conveyor device (2).

9. Machine according to claim 8,
**characterised in that**
underneath the extension of the pick-up device (9) which projects beyond the conveyor device (2) there is a second discharge place (15) divided from the first discharge place (14) for the card parts which are stripped from the pick-up device and accordingly the stripper device (12) is mounted on the underneath side of the pick-up device (9).

10. Machine according to one of claims 6 to 9,
**characterised in that**
seen in the conveyor direction the at least one belt (10) of the pick-up device (9) tapers with its side lying towards the conveyor device (2) at an acute angle to the end of the conveyor device (2).

11. Machine according to one of claims 5 to 10,
**characterised in that**
in the region of the sorting station (5) the inside of the side of the at least one belt (10) of the pick-up device (9) lying towards the conveyor device (2) is biased by means of a sensor roller (16) which is mounted to pivot against the force of a spring (18) and through which with the deflection about a predetermined pivotal path the drives of the conveyor device (2) and of the pick-up device (9) are stopped.

12. Machine according to claim 11,
**characterised in that**
the side of the at least one belt (10) of the pick-up device (9) adjoining the conveyor device (2) diverges from the sensor roller (16) relative to the end of the conveyor device (2) for the purpose of forming an inlet gusset.

13. Machine according to one of claims 4 to 12,
**characterised in that**
the conveyor device (2) has a conveyor belt (26) covering the entire conveyor width and adjoined in the conveyor direction by a roller (28) which forms the end of the conveyor device (2) and on which are formed the free spaces (7) which receive the barbs (11) of the pick-up device (9).

14. Machine according to claim 13,
**characterised in that**
the roller (28) is mounted with its upper peak area level with the top side of the upper side (27) of the conveyor belt (26).

15. Machine according to claim 13 or 14,
**characterised in that**
the roller (28) consists of discs (28) arranged coaxial with one another and having a distance from one another which forms the relevant free space (7) between them.

16. Machine according to one of claims 13 to 15,
**characterised in that**
the roller (28) is driven with a circumferential speed which is synchronous with the conveyor speed of the conveyor belt (26).

## Revendications

1. Procédé pour éliminer le carton d'un mélange de vieux papiers composé de papier plus instable et de carton plus rigide, selon lequel le papier et le carton sont transportés, posés à plat, sur un dispositif de transport et ne sont soutenus que partiellement avec un intervalle tel que, d'une part, au moyen d'ergots d'un dispositif de prise en charge, qui sortent sur les sections non soutenues du papier et du carton, le papier plus instable est tiré dans les espaces libres du dispositif de transport, situés au-dessous des sections non soutenues, et est conduit plus loin par celui-ci, et que, d'autre part, le carton est transpercé et embroché, ce après quoi ledit carton est enlevé des ergots du dispositif de prise en charge, à distance du papier s'écoulant du dispositif de transport.

2. Machine pour éliminer le carton d'un mélange de vieux papiers composé de papier plus instable et de carton plus rigide,
**caractérisée**
**par** un dispositif de transport (2) qui, transportant le papier et le carton posés à plat, se termine dans un poste de triage (5) et présente, dans la zone d'extrémité, des espaces libres (7) entre les sections non soutenues, ainsi qu'au dessous de celles-ci, et par un dispositif de prise en charge (9), agencé dans le poste de triage (5), qui est équipé d'ergots (11) faisant saillie librement et qui se déplace en synchronisme avec le dispositif de transport (2), les ergots (11) du dispositif de prise en charge (9) étant orientés de telle manière qu'ils plongent dans les espaces libres (7) du dispositif de transport (2) situés plus profondément, tout en entraînant le papier demeuré sur le dispositif de transport (2) ainsi qu'en piquant et prenant en charge le carton, et en outre, par un dispositif d'enlèvement (12) du carton qui est agencé dans la région de déplacement du dispositif de prise en charge (9) ainsi que séparé spatialement du point de déchargement du papier du dispositif de transport (2)

3. Machine selon la revendication 2,
**caractérisée en ce que**
le dispositif de transport (2) est composé de bandes de transport (3) continues, parallèles les unes aux autres qui sont disposées à une telle distance les unes des autres que des espaces libres (7) sont formés entre elles.

4. Machine selon la revendication 3,
**caractérisée en ce que**
sont disposés, entre les bandes de transport (3) du dispositif de transport (2) et à même hauteur que celles-ci, des rails de glissement fixes (6) qui présentent des rainures qui, s'étendant longitudinalement, parallèlement aux bandes de transport (3), forment les espaces libres (7).

5. Machine selon les revendications 2 à 4,
**caractérisée en ce que**
le dispositif de transport (2) présente une surface de transport plane, orientée vers le haut, au-dessus de laquelle le dispositif de prise en charge (9) est agencé.

6. Machine selon les revendications 2 à 5,
**caractérisée en ce que**
le dispositif de prise en charge (9) consiste au moins en une bande (10) continue qui est équipé d'ergots (11) sur ses surfaces extérieures.

7. Machine selon la revendication 6,
**caractérisée en ce que**
la bande (10) du dispositif de prise en charge (9) au moins prévue chevauche le dispositif de transport (2) dans la zone du poste de triage (5) et est prolongée au-delà de celui-ci, dans la direction de transport.

8. Machine selon la revendication 7,
**caractérisée en ce que**,
au-dessous du prolongement du dispositif de prise en charge (9) au-delà du dispositif de transport (2), se trouve un emplacement de rejet (14) du papier déchargé du dispositif de transport (2).

9. Machine selon la revendication 8,
**caractérisée en ce que**,
au-dessous du prolongement du dispositif de prise en charge (9), se trouve, séparé du premier emplacement de rejet (14), un deuxième emplacement de rejet (15) du carton enlevé du dispositif de prise en charge (9) et que le dispositif d'enlèvement (12) est disposé de manière appropriée sur la face inférieure du dispositif de prise en charge (9).

10. Machine selon les revendications 6 à 9,
**caractérisée en ce que**
la bande (10) du dispositif de prise en charge (9) au moins prévue, vue dans la direction de transport, forme par rapport à l'extrémité du dispositif de transport (2) un angle aigu avec sa portée orientée vers le dispositif de transport (2).

11. Machine selon les revendications 5 à 10,
**caractérisée en ce que**,
dans la zone du poste de triage (5), la face intérieure de la portée de la bande (10) au moins prévue du dispositif de prise en charge (9), orientée vers le dispositif de transport (2), est soumise à l'action d'un rouleau palpeur (16) qui est monté en pivotement contre la force d'un ressort (18), et que les entraînements du dispositif de transport (2) et du dispositif de prise en charge (9) sont arrêtés lors d'une déviation sur un parcours de pivotement prédéterminé.

12. Machine selon la revendication 11,
**caractérisée en ce que**
la portée de la bande (10) du dispositif de prise en charge (9) au moins prévue, qui avoisine le dispositif de transport (2), diverge de l'extrémité du dispositif de transport (2), à partir du rouleau palpeur (16), pour former une zone d'admission.

13. Machine selon les revendications 4 à 12,
**caractérisée en ce que**
le dispositif de transport (2) présente une bande de transport (26), couvrant toute la largeur de transport, à laquelle fait suite, dans la direction de transport, un rouleau (28) qui forme l'extrémité finale du dispositif de transport (2) et sur lequel sont formés les espaces libres (7) qui accueillent les ergots (11) du dispositif de prise en charge (9).

14. Machine selon la revendication 13,
**caractérisée en ce que**
le rouleau (28) se trouve par sa zone supérieure la plus élevée à la même hauteur que la face supérieure de la portée supérieure (27) de la bande de transport (26) .

15. Machine selon revendication 13 ou 14,
**caractérisée en ce que** le rouleau (28) est composé de disques coaxiaux les uns par rapport aux autres, qui sont séparés les uns des autres par des intervalles qui forment les espaces libres (7).

16. Machine selon les revendications 13 à 15,
**caractérisée en ce que**
le rouleau (28) est entraîné à une vitesse périphérique en synchronisme avec la vitesse de déplacement de la bande de transport (26).
